# EUROPÄISCHE PATENTSCHRIFT

(11) **EP 2 337 975 B1**
(45) Veröffentlichungstag und Bekanntmachung des Hinweises auf die Patenterteilung: **18.09.2013**
(21) Anmeldenummer: 09783534.2
(22) Anmeldetag: 29.09.2009
(51) Int. Cl.: F16H 61/14, B60W 30/18, F16H 61/02

(54) **VERFAHREN ZUM UMSTEUERN DER FAHRTRICHTUNG EINES FAHRZEUGS**
METHOD FOR REVERSING THE DIRECTION OF TRAVEL OF A VEHICLE
PROCÉDÉ D'INVERSION DU SENS DE MARCHE D'UN VÉHICULE À MOTEUR

(30) Priorität: 23.10.2008 DE 102008043107
(43) Veröffentlichungstag der Anmeldung: 29.06.2011
(73) Patentinhaber: ZF Friedrichshafen AG, 88038 Friedrichshafen (DE)
(72) Erfinder: HÖFLER, Hans, 88090 Immenstaad (DE); KURZ, Thomas, 88085 Langenargen (DE)
(86) Internationale Anmeldenummer: PCT/EP2009/062595
(87) Internationale Veröffentlichungsnummer: WO 2010/046206

(56) Entgegenhaltungen:
- WO-A-2006/017902
- DE-A1- 4 407 951
- US-A- 3 985 046

## Beschreibung

Die Erfindung betrifft ein Verfahren zum Umsteuern der Fahrtrichtung eines Fahrzeugs nach der im Oberbegriff von Anspruch 1 näher definierten Art.

Arbeitsmaschinen, beispielsweise Radlaler, Gabelstapler, Baggerlader oder Tele-Handler, weisen beim Arbeitseinsatz Zeitanteils auf, innerhalb welcher sie mit kurzen Arbeitszyklen im Reversierbetrieb gefahren werden. Wenn ein Radlader von einem Haufen einen Lkw belädt, wird er im sogenannten Y-Betrieb betrieben, bei welchem häufiges Reversieren, d. h. sofortige Änderung der Fahrtrichtung, notwendig ist.

Die DE 44 07 951 C2 offenbart einen Kraftfahrzeugantrieb mit einem Drehmomentwandler und einer Überbrückungskupplung des Drehmomentwandlers, welche immer dann im Öffnungssinne betätigt ist, wenn ein ruck- oder schwingungsfreier Betrieb des Kraftfahrzeugs nicht gewährleistet ist.

Der vorliegende Erfindung liegt die Aufgabe zugrunde, die Fahrtrichtungsumkehr eines Fahrzeugs mit einem hydrodynamischen Drehmomentwandler weiter zu verbessern.

Diese Aufgabe wird mit einem Verfahren nach Anspruch 1 gelöst.

Die Überbrückungskupplung des hydrodynamicschen Drehmomentwandlers wird immer dann im Öffnungssinne betätigt, wenn das Fahrzeug eine Fahrtrichtungsumkehr durchführt.

Beim Umsteuem der Fahrtrichtung unterhalb eines zuvor definierten Geschwindigkeitsniveaus wird die Überbrückungskupplung des hydrodynamischen Drehmomentwandlers im Öffnungssinne und anschließend die zuvor im Schließsinne betätigte erste Fahrtrichtungskupplung im Öffnungssinne und die zweite Fahrtrichtungskupplung im Schließsinne betätigt, wodurch das Fahrzeug sehr schnell verzögert und anschließen in die entgegengesetzte Richtung beschleunigt, ohne dass der Antriebsmotor in seiner Drehzahl während des Reversierens zu stark verringert bzw. abgewürgt wird.

Beim Reversieren oberhalb eines zuvor definierten Geschwindigkeitsniveaus bleibt die zuvor eingelegte erste Fahrtrichtungskupplung so lange eingelegt und die zweite Fahrtrichtungskupplung so lange im Öffnungssinne betätigt, bis das Fahrzeug auf das zuvor definierte Geschwindigkeitsniveau in seiner Geschwindigkeit reduziert wurde, wobei während dieser Geschwindigkeitsreduzierung die Überbrückungskupplung des hydrodynamischen Drehmomentwandlers im Öffnungssinne betätigt ist. Ist das zuvor definierte Geschwindigkeitsniveau erreicht, so wird die zuvor eingelegte erste Fahrtrichtungskupplung im Öffnungssinne und die zweite Fahrtrichtungskupplung im Schließsinne betätigt, wodurch das Fahrzeug weiter in seiner Geschwindigkeit reduziert wird und anschließend in der neuen Fahrtrichtung wieder beschleunigt. Nach Abschluß des Reversiervorgangs wird die Überbrückungskupplung des hydrodynamischen Drehmomentwandlers wieder freigeschaltet, wobei nach Vorliegen weiterer Betriebsparameter die Überbrückungskupplung im Schließsinne betätigt werden kann. Beispielsweise wird die Überbrückungskupplung des hydrodynamischen Drehmomentwandlers im Schließsinne betätigt, wenn das Turbinendrehmoment zwischen im Schließsinne betätigter und im Öffnungssinne betätigter Kupplung des hydrodynamischen Drehmomentwandlers nahezu gleich groß ist.

Indem während eines Reversiervorgangs die Überbrückungskupplung des hydrodynamischen Drehmomentwandlers im Öffnungssinne betätigt ist, wird der Antriebsmotor während des Reversiervorgangs in seiner Drehzahl nicht so stark verringert, wie dies bei geschlossene Überbrückungskupplung der Fall wäre, wodurch ein schnelles Wechseln der Fahrtrichtung möglich ist.

In einer Ausgestaltungsform der Erfindung wird eine Fahrtrichtungsumkehr detektiert, wenn der Fahrtrichtungshebel in die entgegengesetzte Fahrtrichtung umgelegt wird oder wenn die Fahrtrichtungskupplungen entgegengesetzt angesteuert werden.

## Patentansprüche

1. Verfahren zum Umsteuern einer Fahrtrichtung eines als Arbeitsmaschine ausgeführten Fahrzeugs von einer ersten Fahrtrichtung in eine entgegengesetzte zweite Fahrtrichtung, wobei das Fahrzeug einen hydrodynamischen Drehmomentwandler mit einer Überbrückungskupplung und ein Getriebe zum Schalten von der ersten Fahrtrichtung in die zweite Fahrtrichtung aufweist, wobei die Überbrückungskupplung im Schließsinne betätigbar ist, um einen Antrieb des hydrodynamischen Drehmomentwandlers mit einem Abtrieb des hydrodynamischen Drehmomentwandlers direkt zu verbinden, und im Öff-nungssinne betätigbar ist, um diese Verbindung zu trennen, **dadurch gekennzeichnet, dass** bei einem zuvor definierten Geschwindigkeitsniveau die Fahrtrichtung aus einer Fahrgeschwindigkeit in einer ersten Fahrtrichtung in eine Fahrgeschwindigkeit in einer zweiten Fahrtrichtung umgesteuert wird indem
- die Überbrückungskupplung im Öffnungssinne betätigt wird
- die zuvor eingelegte Fahrtrichtungskupplung im Öffnungssinne und eine zweite Fahrtrichtungskupplung für die zweite Fahrtrichtung im Schließsinne betätigt wird, wodurch das Fahrzeug in seiner Geschwindigkeit reduziert wird und anschließend in der neuen Fahrtrichtung wieder beschleunigt wird und
- nach Abschluss des Reversiervorgangs die Überbrückungskupplung wieder freigeschaltet wird, wodurch nach Vorliegen weiterer Betriebsparameter die Überbrückungskupplung im Schließsinne betätigt werden kann.

2. Verfahren zum Umsteuern einer Fahrtrichtung eines Fahrzeugs nach Anspruch 1, **dadurch gekennzeichnet, dass** die Überbrückungskupplung im Schließsinne betätigt wird, wenn ein Drehmoment eines Turbinenrades des Drehmomentwandlers bei im Schließsinne und im Öffnungssinne betätigter Überbrückungskupplung nahezu gleich groß ist.

3. Verfahren zum Umsteuern einer Fahrtrichtung eines Fahrzeugs nach Anspruch 1, **dadurch gekennzeichnet, dass** der Schaltpunkt zum Betätigen der Überbrückungskupplung ohne Fahrtrichtungswechsel mittels der Drehzahl eines Turbinenrades und der Drehzahl eines Pumpenrades des Drehmomentwandlers ermittelt wird.

4. Verfahren zum Umsteuern einer Fahrtrichtung eines Fahrzeugs nach Anspruch 1, **dadurch gekennzeichnet, dass** oberhalb des zuvor definierten Geschwindigkeitsniveaus nach Betätigen der Überbrückungskupplung im Öffnungssinne eine Fahrtrichtungskupplung für die zuvor eingelegte erste Fahrtrichtung im Schließsinne betätigt bleibt, bis die zuvor definierte Geschwindigkeit erreicht ist und anschließend die zuvor eingelegte Fahrtrichtungskupplung im Öffnungssinne und eine zweite Fahrtrichtungskupplung für die zweite Fahrtrichtung im Schließsinne betätigt wird.

## Claims

1. Method for reversing a direction of travel of a vehicle which is embodied as a working machine, from a first direction of travel to an opposed, second direction of travel, wherein the vehicle comprises a hydrodynamic torque converter with a torque lockup clutch and a gearbox for switching from the first direction of travel to the second direction of travel, wherein the torque lockup clutch can be activated in the closing direction in order to connect a driver of the hydrodynamic torque converter directly to an output of the hydrodynamic torque converter, and can be activated in the opening direction in order to disconnect this connection, **characterized in that** at a previously defined speed level the direction of travel is reversed from a velocity in a first direction of travel to a velocity in a second direction of travel **in that**
- the torque lockup clutch is activated in the opening direction,
- the previously engaged direction of travel clutch is activated in the opening direction, and a second direction of travel clutch for the second direction of travel is activated in the closing direction, wherein the speed of the vehicle is reduced and the vehicle is subsequently accelerated again in the new direction of travel, and
- after the conclusion of the reversing process, the torque lockup clutch is opened again, as a result of which after further operating parameters are present the torque lockup clutch can be activated in the closing direction.

2. Method for reversing a direction of travel of a vehicle according to Claim 1, **characterized in that** the torque lockup clutch is activated in the closing direction if a torque of a turbine wheel of the torque converter when the torque lockup clutch is activated in the closing direction is virtually of the same magnitude as when it is activated in the opening direction.

3. Method for reversing a direction of travel of a vehicle according to Claim 1, **characterized in that** the shifting point for activating the torque lockup clutch without a change for the direction of travel is determined by means of the rotational speed of a turbine wheel and the rotational speed of a pump wheel of the torque converter.

4. Method for reversing a direction of travel of a vehicle according to Claim 1, **characterized in that** above the previously defined speed level, a direction of travel clutch for the previously engaged first direction of travel remains activated in the closing direction, after the activation of the torque lockup clutch in the opening direction, until the previously defined speed is reached, and subsequently the previously engaged direction of travel clutch is activated in the opening direction, and a second direction of travel clutch for the second direction of travel is activated in the closing direction.

## Revendications

1. Procédé d'inversion du sens de marche d'un véhicule réalisé sous forme d'engin de travail, depuis un premier sens de marche dans un deuxième sens de marche opposé, le véhicule présentant un convertisseur de couple hydrodynamique avec un embrayage de pontage et une transmission pour commuter du premier sens de marche au deuxième sens de marche, l'embrayage de pontage pouvant être actionné dans le sens de la fermeture afin de relier directement un entraînement du convertisseur de couple hydrodynamique à une prise de force du convertisseur de couple hydrodynamique, et pouvant être actionné dans le sens de l'ouverture a fin de rompre cette connexion, **caractérisé en ce que** dans le cas d'un niveau de vitesse défini préalablement, le sens de marche est inversé d'une vitesse de marche dans un premier sens de marche à une vitesse de marche dans un deuxième sens de marche, **en ce que**
- l'embrayage de pontage est actionné dans le sens de l'ouverture,
- l'embrayage de sens de marche enclenché préalablement est actionné dans le sens de l'ouverture et un deuxième embrayage de sens de marche pour le deuxième sens de marche est actionné dans le sens de la fermeture, de sorte que la vitesse du véhicule soit réduite et soit à nouveau accélérée dans le nouveau sens de marche, et
- à la fin de l'opération d'inversion, l'embrayage de pontage est à nouveau commuté de manière à pouvoir être activé, de sorte qu'en fonction de la présence d'autres paramètres de fonctionnement, l'embrayage de pontage puisse être actionné dans le sens de la fermeture.

2. Procédé d'inversion du sens de marche d'un véhicule selon la revendication 1, **caractérisé en ce que** l'embrayage de pontage est actionné dans le sens de la fermeture lorsqu'un couple d'une roue de turbine du convertisseur de couple est pratiquement identique lorsque l'embrayage de pontage est actionné dans le sens de la fermeture et dans le sens de l'ouverture.

3. Procédé d'inversion du sens de marche d'un véhicule selon la revendication 1, **caractérisé en ce que** le point de commutation pour l'actionnement de l'embrayage de pontage est détecté sans changement du sens de marche au moyen de la vitesse de rotation d'une roue de turbine et de la vitesse de rotation d'une roue de pompe du convertisseur de couple.

4. Procédé d'inversion du sens de marche d'un véhicule selon la revendication 1, **caractérisé en ce qu'**au-dessus du niveau de vitesse défini préalablement après l'actionnement de l'embrayage de pontage dans le sens de l'ouverture, un embrayage de sens de marche pour le premier sens de marche enclenché préalablement reste actionné dans le sens de la fermeture jusqu'à ce que la vitesse définie préalablement soit atteinte et ensuite l'embrayage de sens de marche enclenché préalablement est actionné dans le sens de l'ouverture et un deuxième embrayage de sens de marche pour le deuxième sens de marche est actionné dans le sens de la fermeture.
